# EUROPEAN PATENT APPLICATION

(11) **EP 1 291 070 A1**
(43) Date of publication of application: **12.03.2003**
(21) Application number: 01932135.5
(22) Date of filing: 18.05.2001
(51) Int. Cl.: B01D 53/86, B01J 23/34, B01D 53/70, F23J 15/00, F23G 5/44

(54) **METHOD AND APPARATUS FOR DECOMPOSING HALOGENATED ORGANIC COMPOUND IN EXHAUST GAS**

(30) Priority: 19.05.2000 JP 2000147842; 14.07.2000 JP 2000214812; 05.04.2001 JP 2001106897
(71) Applicant: NKK CORPORATION, Tokyo 100-0005 (JP)
(72) Inventor: NAGANO, Hideki, NKK Corporation, Tokyo 100-0005 (JP); MIYAZAWA, Kunio, NKK Corporation, Chiyoda-ku, Tokyo 100-0005 (JP)
(74) Representative: HOFFMANN - EITLE
(86) International application number: JP0104160
(87) International publication number: WO01087466

(57) **Abstract**

The invention provides a method and an apparatus for decomposing halogenated organic compounds in flue gas discharged from waste incinerator or the like by injecting a composition containing at least one oxide selected from the group consisting of trivalent manganese oxide and tetravalent manganese oxide into the flue gas, by letting flue gas pass through a moving bed of a composition containing at least one oxide selected from the group consisting of trivalent manganese oxide and tetravalent manganese oxide into the flue gas, or by letting flue gas pass through a fixed bed configured by detachable single or plural packed chambers each filled with a composition containing at least one oxide selected from the group consisting of trivalent manganese oxide and tetravalent manganese oxide. The invention allows decomposing halogenated organic compounds in flue gas readily at low cost without significantly decreasing the treatment capacity. In addition, the invention allows recycling the used manganese oxide.

## Description

### TECHNICAL FIELD

The present invention relates to a method for decomposing halogenated organic compounds such as dioxins existing in a flue gas generated from combustion of municipal waste, industrial waste, medical waste, and raw material for produced sintered ore in iron and steel making, and an apparatus therefor.

### BACKGROUND ART

In recent years, halogenated organic compounds such as dioxins which are extremely toxic substances are detected in flue gas generated from incineration process of municipal waste and industrial waste and from metal refining process using electric furnace or the like, which raises serious social concern. The halogenated organic compounds include chlorobenzenes; chlorinated organic compounds such as polychloro-dibenzo-*p*-dioxin, polychloro-dibenzofuran, and polybiphenylchloride; bromobenzenes; polybromo-dibenzo-*p*-dioxin; polybromo-dibenzofuran; polybromobiphenyl; fluorobenzenes; polyfluoro-dibenzo-*p*-dioxin; polyfluoro-dibenzofuran; and polybiphenylfluoride.

Regulations to the emissions of dioxins for incinerators have become stricter than ever, and sole existing technology for suppressing the generation of dioxins cannot satisfy the regulations.

To this point, for example, current waste incinerators adopt a method to remove dioxins from flue gas by injecting activated carbon at upstream of bag filter while reducing the temperature inside the bag filter. The method, however, can only remove the dioxins from flue gas, and the removed dioxins are accumulated in the collected ash. As a result, the dioxins in the collected ash have to be treated to detoxify, thus the method cannot substantially solve the problem.

On the other hand, there are studies for decomposing highly toxic chlorinated aromatic compounds such as dioxins, and various methods have been proposed: ① high temperature incineration method; ② microorganism treatment method; and ③ chemical decomposition method. As of these, the chemical decomposition method has features of being able to conduct reactions in a low temperature region, and being able to decompose dioxins efficiently within a short time.

A typical example of the chemical decomposition method is the one to locate a fixed bed packed with a catalyst and the like, through which bed the flue gas is passed to decompose dioxins by the oxidation reaction thereof. For example, according to Japanese patent No. 2899270, an oxidizing agent such as permanganate or hydrogen peroxide is added to the flue gas, and the flue gas is brought into contact with the manganese dioxide catalyst bed to make dioxins oxidize and decompose. When the catalyst bed is clogged, sequential operations of water-filling, air cleaning, water washing, and water-draining of the catalyst bed using an air-cleaning pipe and a water-washing pipe located below the catalyst bed, then the flue gas treatment is resumed.

Other than the one given above, the chemical decomposition method includes the one using a noble metal catalyst and hydrogen gas, or the one heating the flue gas to a range of 300°C to 350°C under the presence of catalyst, alkali, and hydrogen donor, thus reducing the chlorine in the chlorinated organic compounds by the hydrogen supplied from the hydrogen donor to conduct dechlorination.

The method described in Japanese patent No. 2899270, however, has to stop the decomposition operation during the cleaning of clogged catalyst bed, which raises a problem of significant reduction in the treatment capacity. An oxidizing agent such as permanganate and hydrogen peroxide is added to the flue gas to conduct reclamation of the used manganese oxide short in oxygen content to manganese dioxide. Since the oxidizing agent reacts also with impurities in the flue gas, there arises a difficulty in controlling the adding amount of oxidizing agent, and, if the amount of oxidizing agent becomes insufficient, the quantity of manganese dioxide becomes insufficient, which degrades the dioxins decomposition performance.

The method for reducing dioxins by hydrogen using a noble metal catalyst increases the treatment cost owing to expensive catalyst, and becomes difficult to control the operation because complex reactions are utilized.

### DISCLOSURE OF THE INVENTION

An object of the present invention is to provide a method for decomposing halogenated organic compounds in flue gas readily at low cost without significantly degrading the treatment capacity, and to provide an apparatus therefor.

The object is achieved by a method for decomposing halogenated organic compounds in flue gas, which method comprises the step of injecting a composition containing at least one oxide selected from the group consisting of trivalent manganese oxide and tetravalent manganese oxide into the flue gas. The object is also achieved by a method for decomposing halogenated organic compounds in flue gas, which method comprises the step of introducing the flue gas to flow through a moving bed of a composition containing at least one oxide selected from the group consisting of trivalent manganese oxide and tetravalent manganese oxide. Furthermore, the object is also achieved by a method comprising the step of introducing the flue gas to flow through a fixed bed configured by detachable single or plural packed chambers each filled with a composition containing at least one oxide selected from the group consisting of trivalent manganese oxide and tetravalent manganese oxide.

These methods are actualized by: an apparatus for decomposing halogenated organic compounds in flue gas, which apparatus comprises a unit for injecting a composition having at least one oxide selected from the group consisting of trivalent manganese oxide and tetravalent manganese oxide into the flue gas; an apparatus for decomposing halogenated organic compounds in flue gas, having a moving bed of a composition containing at least one oxide selected from the group consisting of trivalent manganese oxide and tetravalent manganese oxide, through which moving bed the flue gas passes; or an apparatus for decomposing halogenated organic compounds in flue gas, having a fixed bed configured by detachable single or plural packed chambers each filled with a composition containing at least one oxide selected from the group consisting of trivalent manganese oxide and tetravalent manganese oxide, through which fixed bed the flue gas passes.

### BRIEF DESCRIPTION OF THE DRAWINGS

Fig. 1 illustrates a waste incineration facility provided with an apparatus for decomposing halogenated organic compounds in flue gas, as an example of the present invention.
Fig. 2 is a graph showing the changes in dioxins concentration with time.
Fig. 3 illustrates a waste incineration facility provided with an apparatus for decomposing halogenated organic compounds in flue gas, as another example of the present invention.
Fig. 4 illustrates an apparatus for decomposing halogenated organic compounds in flue gas, as an example of the present invention.
Fig. 5 is a graph showing X-ray diffraction analysis on manganese oxide after reclaimed.
Fig. 6 illustrates a waste incineration facility provided with an apparatus for decomposing halogenated organic compounds in flue gas, as another example of the present invention.
Fig. 7 illustrates an apparatus for decomposing halogenated organic compounds in flue gas, as still another example of the present invention.

### EMBODIMENTS OF THE INVENTION

The inventors of the present invention studied the methods for chemically decomposing halogenated organic compounds such as dioxins in flue gas, and found that the halogenated organic compounds can be decomposed without inducing clogging of catalyst bed and without decreasing the treatment capacity by injecting a composition containing at least one oxide selected from the group consisting of trivalent manganese oxide and tetravalent manganese oxide into the flue gas. Since the method continuously injects a composition containing at least one oxide selected from the group consisting of trivalent manganese oxide and tetravalent manganese oxide into the flue gas, the performance to decompose halogenated organic compounds is not degraded. Furthermore, the method is inexpensive and easy for operation because only the composition containing at least one oxide selected from the group consisting of trivalent manganese oxide and tetravalent manganese oxide is injected into the flue gas.

Applicable composition containing at least one oxide selected from the group consisting of trivalent manganese oxide and tetravalent manganese oxide includes manganese sesquioxide, manganese dioxide, mixture of them, or manganese ore containing them (such as BHP ore, Indian manganese ore, Mt. Newman ore, and Hamasley ore). Instead of these manganese oxides, a composition containing CeO₂ or Fe₂O₃ also provides similar effect.

The decomposition reaction of halogenated organic compounds by manganese oxide proceeds at around 50°C of flue gas temperature, and increases the reaction rate with an increase in temperature. For practical application, it is preferable that the temperature is 100°C or above. If, however, the temperature exceeds 530°C, manganese dioxide which is a tetravalent manganese oxide decomposes by itself. If the temperature exceeds 950°C, manganese sesquioxide which is a trivalent manganese oxide decomposes by itself. Accordingly, the reaction is preferably conducted in a temperature range below the above-given levels. Nevertheless, even at around 1,000°C of temperature, the decomposition of halogenated organic compounds proceeds owing to the presence of non-decomposed manganese sesquioxide. It is also preferred that the reaction temperature is in a region where dioxins are in gas phase, or at or above 400°C which is in a temperature region where dioxins are not adsorbed to dust, more preferably 450°C or higher reaction temperature. The decomposition of halogenated organic compounds by manganese oxide according to the present invention is an oxidation reaction which yields carbon dioxide, water, and HCl as the final products.

If the quantity of halogenated organic compounds in flue gas is determined by an instrument such as gas chromatograph mass spectrometer or gas chromatograph electron capture detector, and the quantity of injecting manganese oxide is controlled based on thus determined value, the halogenated organic compounds can be decomposed with an adequate quantity of injecting manganese oxide.

An example of injecting manganese oxide into the flue gas is the direct injection of powder of manganese oxide into the flue gas via a nozzle for injecting calcium hydroxide or for injecting activated carbon, located in the gas-duct of waste incineration facility. Alternatively, the powder of manganese oxide may be mixed with liquid such as water to form slurry before injected. For a waste incineration facility which adopts water spray to lower the gas temperature, the manganese oxide slurry may be sprayed, instead of water, which also decomposes the halogenated organic compounds in flue gas.

The particle size of manganese oxide powder is preferably 10 mm or smaller to surely decompose the halogenated organic compounds in flue gas within the gas duct of waste incineration facility or the like. Since the manganese oxide existing in the surface layer of powder particle presumably contributes to the decomposition of halogenated organic compounds, the particle size is preferably as small as possible. Considering the collection of the particles at succeeding dust collector, however, the particle size is more preferable in a range of from 5 to 100 µm.

Once injected manganese oxide can be reused for decomposing the halogenated organic compounds if the manganese oxide is collected at a collection unit such as dust collector along with dust, calcium hydroxide, activated carbon, and fly ash, then recovered from the collected material by injecting air pulse, and injected into the flue gas. The recovered material containing manganese oxide can also be effectively used as a composition-adjusting material for blast furnace, converter, and electric furnace, and as a raw material for producing sintered ore in iron and steel making. As a result, the discharge amount of manganese oxide as waste is significantly reduced. The means for recovering manganese oxide may be the one in which the manganese oxide passes through water, and the one in which the manganese oxide is collected by ultrasonic waves.

Furthermore, a recovered material containing manganese oxide which contains insufficient amount of oxygen resulted from the decomposition of halogenated organic compounds is heated in air or in an oxygen-rich atmosphere, or is brought into contact with ozone, hydrogen peroxide, or potassium permanganate, which likely emits oxygen, at a specific temperature to reclaim the oxygen-lean manganese oxide through oxidation, and the recovered material containing thus reclaimed manganese oxide is again injected into the flue gas. The method conducts more efficient decomposition of halogenated organic compounds and significantly reduces the quantity of consumed manganese oxide and of discharged waste. Owing to the separate line of recovery and reclamation, the manganese oxide consumption is more adequately controlled compared with the related art in which the reclamation of oxygen-lean manganese oxide by adding an oxidation agent to the flue gas, thus attaining more efficient decomposition of halogenated organic compounds.

If the manganese oxide is separated from the recovered material using a pneumatic classifier or a centrifugal separator, and sole manganese oxide is again injected into the flue gas, the manganese oxide free of impurities conducts more efficient decomposition of halogenated organic compounds.

Furthermore, as described above, it is more preferable that the separated manganese oxide is reclaimed before injecting it in the flue gas.

Instead of injecting manganese oxide into the flue gas, the flue gas may be introduced to pass through a moving bed of a composition containing at least one oxide selected from the group consisting of trivalent manganese oxide and tetravalent manganese oxide, which conducts effective contact between the flue gas and the manganese oxide, thus almost completely decomposing the halogenated organic compounds in flue gas. The moving bed referred herein means a bed in which a layer of manganese oxide is successively moved to one direction, and the manganese oxide after reacted with the halogenated organic compounds in flue gas is successively moved and is discharged from the bed at one end thereof, while a composition containing at least one oxide selected from the group consisting of trivalent manganese oxide and tetravalent manganese oxide is continuously charged to the bed from other end thereof, thus conducting reaction with the halogenated organic compounds. Owing to the configuration, even when the dust and fly ash in the flue gas induce clogging of the bed, the clogged portions are successively moved through the bed and discharged from the bed so that the treatment capacity does not significantly reduce.

Instead of the moving bed of manganese oxide, a fixed bed configured by detachable single or plural packed chambers each filled with a composition containing at least one oxide selected from the group consisting of trivalent manganese oxide and tetravalent manganese oxide may be used. That type of fixed bed does not significantly reduce the treatment capacity because of being able to readily exchange the fixed bed on clogging thereof. If the fixed bed is configured by more than one cartridges, replacement of individual cartridges allows more easy replacement.

In the case that the flue gas passes through a moving bed of manganese oxide, if the quantity of halogenated organic compounds in the flue gas is determined, and if the quantity of moving manganese oxide is controlled based on thus determined value, the halogenated organic compounds can be decomposed with an adequate quantity of moving manganese oxide. In that case, there is an effect of removing a part of dust and fly ash in the flue gas, which reduces the load on succeeding dust collector so that the dust collector becomes small. Furthermore, since the manganese oxide reacts with HCl gas and chlorine gas in the flue gas, re-synthesis of dioxins can be prevented.

When the moving bed and the fixed bed containing the used manganese oxide are recovered and are recharged to the moving bed and the fixed bed, or are reused as a raw material of steel making, the discharge quantity of manganese oxide as waste significantly reduces, and the quantity of manganese oxide used in the present invention significantly reduces. Alternatively, only the manganese oxide may be separated from the recovered material and recharged to the moving bed and the fixed bed. Furthermore, the manganese oxide may be reclaimed separately using the method described above, and be recharged to the moving bed and the fixed bed.

Applicable composition containing at least one oxide selected from the group consisting of trivalent manganese oxide and tetravalent manganese oxide used as the moving bed and the fixed bed includes manganese sesquioxide, manganese dioxide, mixture of them, or manganese ore containing them (such as BHP ore, Indian manganese ore, Mt. Newman ore, and Hamasley ore). Instead of these manganese oxides, a composition containing CeO₂ or Fe₂O₃ also provides similar effect.

The manganese oxide or the like used for the moving bed and the fixed bed preferably has particle sizes of 0.5 to 15 mm, more preferably 0.5 to 10 mm, to prevent clogging of the bed caused by dust and fly ash in the flue gas.

As for the method of passing the flue gas through the moving bed and the fixed bed, when the flue gas is introduced to the bed in horizontal direction thereto or from bottom section thereof, then is guided to vertical directional upward flow, the decomposition of halogenated organic compounds is more efficiently conducted. In that case, flue gas is preferably subjected to dust-removal treatment, in advance, to eliminate the influence of dust.

Alternatively, the moving bed or the fixed bed may be installed in the gas duct of the flue gas, and letting the flue gas passing therethrough.

Also in the case of moving bed or fixed bed application, the temperature of flue gas is preferably adjusted in a range of 100°C to 1,000°C.

The above-described method for decomposing halogenated organic compounds in flue gas according to the present invention is achieved by a decomposition apparatus for halogenated organic compounds in flue gas, having a unit for injecting manganese oxide into flue gas, a moving bed through which manganese oxide moves, or a fixed bed configured by detachable single or plural packed chambers each filled with manganese oxide.

In addition, a unit for determining the quantity of halogenated organic compound in the flue gas, and a controller for controlling the quantity of manganese oxide being injected into the flue gas, may be installed.

Furthermore, the apparatus may further has: a unit for collecting manganese oxide along with dust and the like; a unit for recovering the collected material; a unit for separating manganese oxide from the recovered material, such as centrifugal separator; and a unit for reclaiming the manganese oxide in the recovered material and the separated manganese oxide by heating them in air or in a oxygen-rich atmosphere, or by letting them contact with ozone, hydrogen peroxide, potassium permanganate, or the like.

### Example 1

A test apparatus of waste incinerator provided with a unit for injecting manganese oxide thereinto, a unit for collecting manganese oxide with dust, and a unit for recovering the collected material was prepared. Australia manganese ore pulverized to 20 to 30 µm in size was transferred to the gas duct using a blower, and injected into the flue gas via an injection nozzle using the injection unit. The injection unit had a capacity of 1.5 m³. The charge rate was regulated by a table feeder to 1 kg/h of injection. The flue gas temperature in the gas duct was about 450°C. All the injected manganese oxide was collected by an electrostatic precipitator at 200°C, and then recovered along with dust and the like by the recovery unit.

The concentration of dioxins in the flue gas before and after the injection of manganese oxide was determined conforming to JIS K0311. The result is given in Table 1.

By injecting manganese oxide into the flue gas, the dioxins in the flue gas were decomposed, and the toxicity conversion concentration decreased from 1.3 ng-TEQ/Nm³ to 0.56 ng-TEQ/Nm³.

**Table 1**

| **Concentration of dioxins in flue gas (ng-TEQ/Nm**^{**3**}**)** | |
|---|---|
| Before reaction | After reaction |
| 1.3 | 0.56 |
| TEQ: Toxicity Equivalency Quantity | |

### Example 2

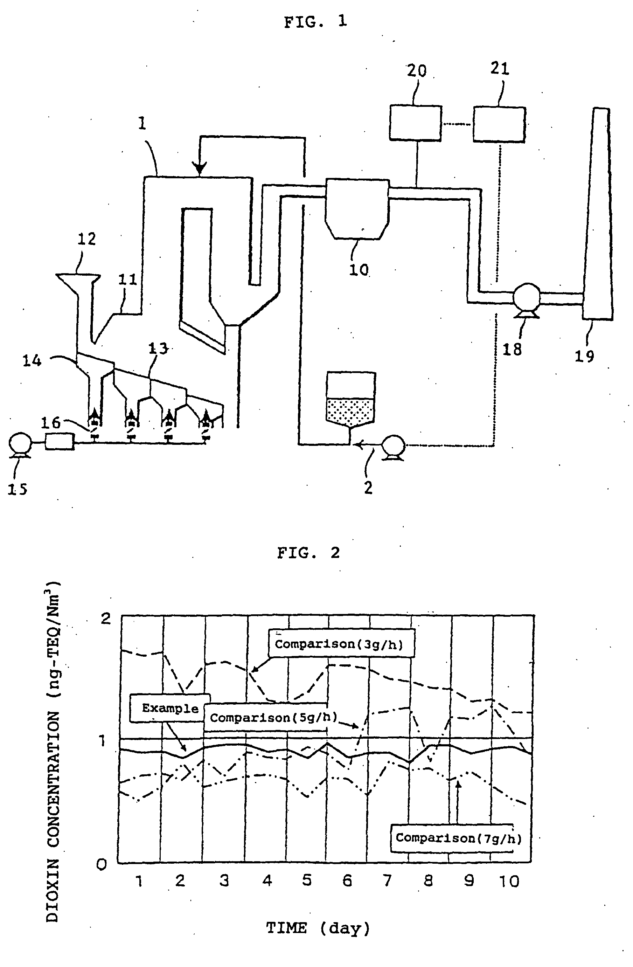

Fig. 1 illustrates a waste incineration facility provided with an apparatus for decomposing halogenated organic compounds in flue gas, as an example of the present invention.

The waste charged from a waste charge hopper 12 located at inlet of a combustion chamber 11 is combusted on a fire grate 13 by the combustion air injected through a combustion air supply section 15, a control valve 16, and a wind box 14. The waste incineration facility treats 48 tons of waste a day.

The flue gas generated by the combustion is brought into contact with manganese oxide injected into a gas duct 1 at exit of the combustion chamber 11 through an injection unit 2 having a hopper, a table feeder, and a blower, to decompose the halogenated organic compounds such as dioxins. After that, the flue gas is discharged from a stack 19 via a main blower 18. During the treatment, the manganese oxide is collected by a dust collector 10 which is a collecting unit. At downstream side of the dust collector 10, a gas chromatograph 20 provided with a sample concentrator and an electron capture detector to determine chlorobenzenes (monochlorobenzene). A controlling unit 21 calculates the concentration of dioxins using a preliminarily entered correlation between chlorobenzenes and dioxins. In this example, the chlorobenzenes were determined. The determination of chlorophenols, however, also derives the concentration of dioxins.

With the waste incineration facility, Australia manganese ore pulverized to 20 µm of particle size was injected through the injection unit 2, and the facility was operated continuously for 10 days to observe the variations of dioxin concentration with time. The quantity of injected manganese oxide was controlled so as the dioxins concentration to become less than 1 ng-TEQ/Nm³. The determination of dioxins concentration was given twice a day at a sampling period of 10 minutes. During the sampling action, the injection of manganese oxide was stopped. As a comparative example, the quantity of injecting manganese oxide was fixed to 3, 5, and 7 g/hr, respectively, to determine the variations of respective dioxins concentrations with time. In that case, also the sampling period for determining dioxins concentration was fixed to 10 minutes, and the injection of manganese oxide during the sampling period was stopped.

Fig. 2 is a graph showing the changes in dioxins concentration with time. Table 2 shows the consumption of manganese ore.

The quantity of injecting manganese ore necessary to maintain the dioxins concentration to less than 1 ng-TEQ/Nm³ was 7 g/hr in the comparative example. According to the method of the present invention, however, the necessary quantity of injecting manganese ore was 4.8 g/hr, which shows that an adequate quantity of manganese ore was injected.

**Table 2**

| Test | Consumption of Mn ore | |
|---|---|---|
| Example 2 | 1.12 kg | 4.8 g/hr |
| Comparative Example | 0.71 kg | 3.0 g/hr |
| | 1.18 kg | 5.0 g/hr |
| | 1.66 kg | 7.0 g/hr |

### Example 3

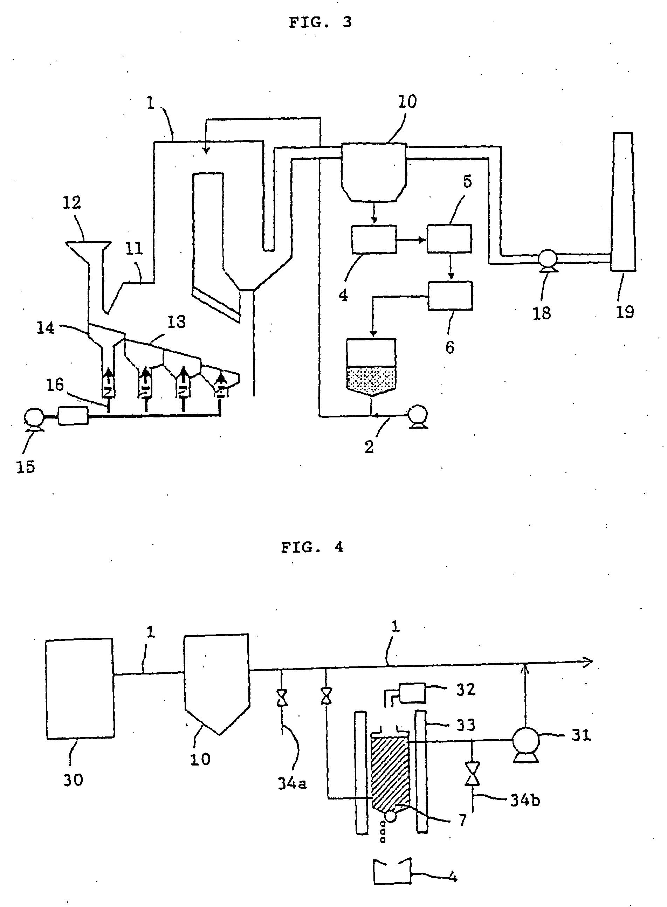

Fig. 3 illustrates a waste incineration facility provided with an apparatus for decomposing halogenated organic compounds in flue gas, as another example of the present invention.

The waste incinerator is the main body of the waste incinerator shown in Fig. 1 provided with a dust collector 10 that collects manganese oxide together with dust, a recovery unit 4 that recovers the collected material, being positioned at downstream side of the dust collector 10, a separation unit 5 that separates manganese oxide from the recovered material, and a reclaiming unit 6 that oxidizes the separated manganese oxide. The reclaimed manganese oxide is reused for decomposing the halogenated organic compounds injected into the gas duct 1 at exit of the combustion chamber 11 by the injection unit 2.

The recovery unit 4 is a receiver tank of particles removed in the dust collector 10. The recovery of manganese oxide collected in the dust collector 10 is preferably done before the accumulated quantity of collected particles increases and then the filtering rate decreases.

An example of the separation unit 5 is a cyclone.

An example of the reclamation unit 6 is a heating furnace which can conduct heating in, for example, a 32% oxygen atmosphere at 500°C for 2 hours.

### Example 4

Fig. 4 illustrates an apparatus for decomposing halogenated organic compounds in flue gas, as an example of the present invention.

The flue gas generated from a flue gas generation unit 30 is removed of its dust in the dust collector 10 located in the gas duct 1, injected into a moving bed 7 of manganese oxide, located in an electric furnace 33 and regulated to a specified temperature, and passed through the moving bed 7 from bottom to top thereof, inverse to the moving direction of the manganese oxide. During that time, the halogenated organic compounds in the flue gas are decomposed. After that, the flue gas is sucked by a pump 31 and returned to the gas duct 1 for venting.

The manganese oxide that moved through the moving bed 7 is discharged from the bed at a specified rate by a quantitative feeder, and is recovered by the recovery unit 4. Manganese oxide of the same quantity with that of the discharged manganese oxide is supplied from a manganese oxide feeder 32 to maintain a constant moving quantity of the manganese oxide through the moving bed 7.

To quantitatively determine the halogenated organic compounds, the flue gas before the decomposition reaction is sampled through a sampling nozzle 34a, and the flue gas after the decomposition reaction is sampled through a sampling nozzle 34b.

The moving bed 7 having 100 mm in inner diameter and 500 mm in height was filled with manganese oxide pulverized to 1 mm size at about 50% of void percentage in the bed. The manganese oxide was moved at 50 mm/h of speed. The temperature of the moving bed 7 was maintained to 450°C using the electric furnace 33. The flue gas was sampled at a gas flow rate of 1 m³/min using the flue gas pump 31, and was also sampled from the sampling nozzles 34a and 34b. The concentration of dioxins was determined for each sampled gas. The result is shown in Table 3.

By the method for decomposing halogenated organic compounds in flue gas using the moving bed according to the present invention, the dioxins are almost completely decomposed.

**Table 3**

| **Concentration of dioxins in flue gas (ng-TEQ/Nm**^{**3**}**)** | |
|---|---|
| Before reaction | After reaction |
| 2.1 | 0.001 |
| TEQ: Toxicity Equivalency Quantity | |

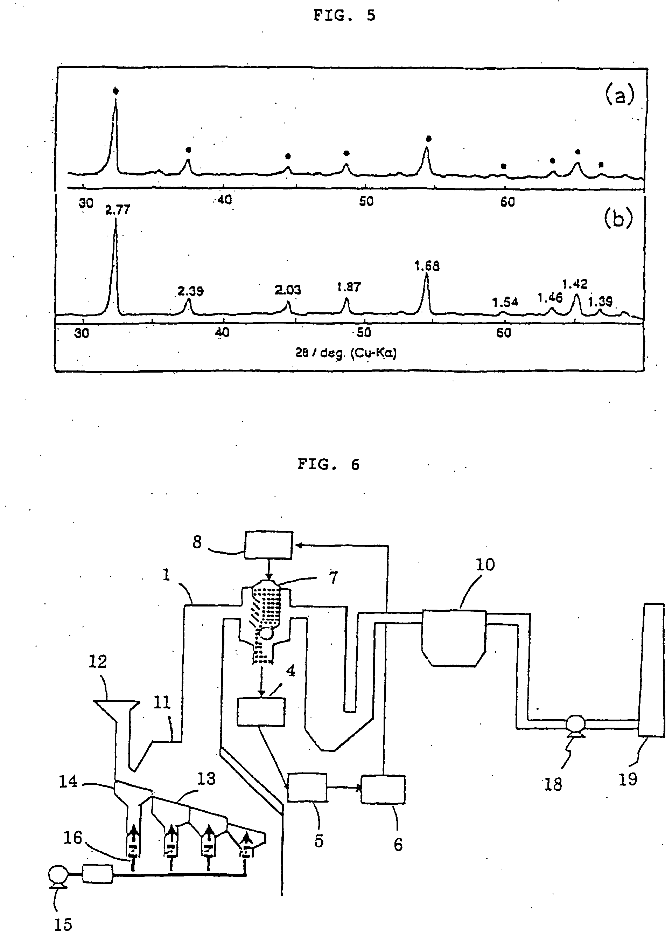

The manganese oxide discharged from the moving bed 7 was recovered by the recovery unit 4, and was reclaimed in the electric furnace at 800°C for 1 hour while letting air flow therethrough. The reclaimed material was analyzed by X-ray deffractometry. The result is given in Fig. 5. Fig. 5(a) shows the analysis after the reclamation treatment, and Fig. 5(b) is the analysis of a reference sample, Mn₂O₃.

The analytical result after the reclamation treatment agrees with the analytical result of the reference sample, Mn₂O₃, which suggests that the reclamation treatment according to the present invention readily reclaimed the recovered manganese oxide to a trivalent oxide, Mn₂O₃. When the reclaimed oxide, Mn₂O₃, was reused for the decomposition of halogenated organic compounds, the obtained result was similar with Table 3. With the simple method of heating in air, the reclamation to Mn₂O₃ having performance of oxidation decomposition of halogenated organic compounds is easily done, which is highly effective for reuse.

### Example 5

Fig. 6 illustrates a waste incineration facility provided with an apparatus for decomposing halogenated organic compounds in flue gas, as another example of the present invention.

The flue gas discharged from the combustion chamber 11 passes through the moving bed 7 of manganese oxide, positioned in the gas duct 1 at exit of the combustion chamber 11. During the course of passing therethrough, the flue gas contacts with the manganese oxide which moves downward from top to bottom of the moving bed, thus decomposes the halogenated organic compounds in the flue gas. After that, the flue gas separates dust and fly ash therefrom in the dust collector 10, and is vented from the stack 19 via the main blower 18. For example, the temperature of the flue gas passing through the moving bed 7 is preferably 450°C or above. Since a part of dust and fly ash in the flue gas are removed in the moving bed 7, the load of succeeding dust collector 10 is reduced to decrease the scale of the dust collector 10.

At downstream side of the moving bed 7, there are successively positioned the recovery unit 4 for recovering manganese oxide along with dust, the separation unit 5 for separating manganese oxide from the recovered material, and the reclaiming unit 6 for oxidizing the separated manganese oxide. The reclaimed manganese oxide is charged to the moving bed 7 using a feeder 8 for reuse. An example of reclamation treatment is the one being operated in a 32% oxygen atmosphere at 500°C for 2 hours.

### Example 6

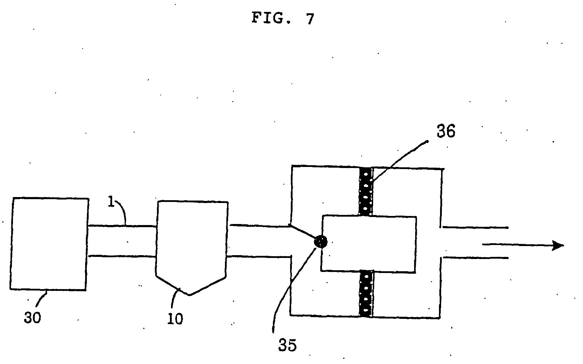

Fig. 7 illustrates an apparatus for decomposing halogenated organic compounds in flue gas, as still another example of the present invention.

The flue gas generated from the flue gas generation unit 30 is removed of its dust in the dust collector 10 located in the gas duct 1 having 50 mm in inner diameter, sent to a cartridge type fixed bed 36 consisting of two cartridges filled with manganese oxide, and then discharged. The flue gas is charged to one cartridge type fixed bed 36 using a switching valve 35, thus allowing replacing another cartridge type fixed bed 36 to which no flue gas is charged. The size of each cartridge type fixed bed 36 is 50 mm in inner diameter and 200 mm in height.

The cartridge type fixed bed 36 was filled with manganese oxide pulverized to 10 mm of particle size, and flue gas of 450°C was introduced to pass through the fixed bed at a flow rate of 1 m³/min. The gas was sampled before and after the reaction to determine the dioxins concentration. The switching of the cartridge type fixed bed by the switching valve 35 was done every 24 hours. The result is shown in Table 4.

By the method for decomposing halogenated organic compounds in flue gas using the cartridge type fixed bed according to the present invention, the dioxins are almost completely decomposed.

It was confirmed that, owing to the cartridge type fixed bed, the problem of clogging of bed is readily solved, and that the halogenated organic compounds in flue gas can be decomposed without decreasing the treatment capacity.

**Table 4**

| **Concentration of dioxins in flue gas (ng-TEQ/Nm**^{**3**}**)** | |
|---|---|
| Before reaction | After reaction |
| 15 | 0.05 |

### Example 7

The cartridge type fixed bed 36 of Example 6 was filled with Mn₂O₃, through which a flue gas at 600°C was passed at a flow rate of 1 m³/min. The flue gas was sampled before and after the reaction to determine the concentration of dioxins. Table 5 shows the result.

Even with the cartridge type fixed bed filled with Mn₂O₃, the dioxins were almost completely decomposed.

**Table 5**

| **Concentration of dioxins in flue gas (ng-TEQ/Nm**^{**3**}**)** | |
|---|---|
| Before reaction | After reaction |
| 18 | 0.11 |

## Claims

1. A method for decomposing halogenated organic compound in flue gas, comprising the step of:
injecting a composition containing at least one oxide selected from the group consisting of trivalent manganese oxide and tetravalent manganese oxide into the flue gas.

2. The method of claim 1, wherein the flue gas is at temperatures of from 100°C to 1,000°C.

3. The method of claim 1, further comprising the steps of:
determining the quantity of the halogenated organic compound in the flue gas; and
controlling the quantity of the injected composition containing at least one oxide selected from the group consisting of trivalent manganese oxide and tetravalent manganese oxide into the flue gas based on the determined quantity of the halogenated organic compound.

4. The method of claim 1, further comprising the steps of:
collecting a material containing the injected manganese oxide; and
recovering the collected material.

5. The method of claim 4, wherein a composition containing CeO₂ or Fe₂O₃ is applied instead of the composition containing at least one oxide selected from the group consisting of trivalent manganese oxide and tetravalent manganese oxide.

6. The method of claim 4, further comprising the step of:
injecting the recovered material into the flue gas.

7. The method of claim 4, further comprising the steps of:
reclaiming manganese oxide existing in the recovered material: and
injecting the reclaimed recovered material into the flue gas.

8. The method of claim 4, further comprising the steps of:
separating manganese oxide from the recovered material; and
injecting the separated manganese oxide into the flue gas.

9. The method of claim 4, further comprising the steps of:
separating manganese oxide from the recovered material;
reclaiming the separated manganese oxide; and
injecting the reclaimed manganese oxide into the flue gas.

10. The method of claim 3, further comprising the steps of:
collecting a material containing the injected manganese oxide;
recovering the collected material;
separating the manganese oxide from the recovered material;
reclaiming the separated manganese oxide; and
injecting the reclaimed manganese oxide into the flue gas.

11. A method for decomposing halogenated organic compound in flue gas, comprising the step of:
introducing the flue gas to flow through a moving bed of a composition containing at least one oxide selected from the group consisting of trivalent manganese oxide and tetravalent manganese oxide.

12. The method of claim 11, wherein the flue gas is at temperatures of from 100°C to 1,000°C.

13. The method of claim 11, further comprising the steps of:
determining the quantity of halogenated organic compound in the flue gas; and
controlling the quantity of the composition containing at least one oxide selected from the group consisting of trivalent manganese oxide and tetravalent manganese oxide moving through the moving bed based on the determined quantity of the halogenated organic compound.

14. The method of claim 11, further comprising the step of:
recovering a material containing manganese oxide from the moving bed.

15. The method of claim 14, wherein a composition containing CeO₂ or Fe₂O₃ is applied instead of the composition containing at least one oxide selected from the group consisting of trivalent manganese oxide and tetravalent manganese oxide.

16. The method of claim 14, further comprising the step of:
charging the recovered material to the moving bed.

17. The method of claim 14, further comprising the steps of:
reclaiming manganese oxide existing in the recovered material: and
charging the reclaimed recovered material to the moving bed.

18. The method of claim 14, further comprising the steps of:
separating manganese oxide from the recovered material; and
charging the separated manganese oxide to the moving bed.

19. The method of claim 14, further comprising the steps of:
separating manganese oxide from the recovered material;
reclaiming the separated manganese oxide; and
charging the reclaimed manganese oxide to the moving bed.

20. The method of claim 13, further comprising the steps of:
recovering a material containing manganese oxide from the moving bed;
separating the manganese oxide from the recovered material;
reclaiming the separated manganese oxide; and
charging the reclaimed manganese oxide to the moving bed.

21. A method for decomposing halogenated organic compound in flue gas, comprising the step of:
introducing the flue gas to flow through a fixed bed configured by detachable single or plural packed chambers each filled with a composition containing at least one oxide selected from the group consisting of trivalent manganese oxide and tetravalent manganese oxide.

22. The method of claim 21, wherein the flue gas is at temperatures of from 100°C to 1,000°C.

23. The method of claim 21, further comprising the step of:
recovering a material containing manganese oxide from the fixed bed.

24. The method of claim 23, wherein a composition containing CeO₂ or Fe₂O₃ is applied instead of the composition containing at least one oxide selected from the group consisting of trivalent manganese oxide and tetravalent manganese oxide.

25. The method of claim 23, further comprising the step of:
charging the recovered material to the fixed bed.

26. The method of claim 23, further comprising the steps of:
reclaiming manganese oxide existing in the recovered material: and
charging the reclaimed recovered material to the fixed bed.

27. The method of claim 23, further comprising the steps of:
separating manganese oxide from the recovered material; and
charging the separated manganese oxide to the fixed bed.

28. The method of claim 23, further comprising the steps of:
separating manganese oxide from the recovered material;
reclaiming the separated manganese oxide; and
charging the reclaimed manganese oxide to the fixed bed.

29. An apparatus for decomposing halogenated organic compound in flue gas comprising:
a unit for injecting a composition containing at least one oxide selected from the group consisting of trivalent manganese oxide and tetravalent manganese oxide into the flue gas.

30. The apparatus of claim 29, further comprising:
a unit for determining the quantity of halogenated organic compound in the flue gas; and
a unit for controlling the quantity of composition containing at least one oxide selected from the group consisting of trivalent manganese oxide and tetravalent manganese oxide being injected into the flue gas based on the determined quantity of the halogenated organic compound.

31. The apparatus of claim 29, further comprising:
a unit for collecting a material containing the injected manganese oxide; and
a unit for recovering the collected material.

32. The apparatus of claim 31, further comprising:
a unit for separating manganese oxide from the recovered material.

33. The apparatus of claim 31, further comprising:
a unit for separating manganese oxide from the recovered material; and
a unit for reclaiming the separated manganese oxide.

34. The apparatus of claim 30, further comprising:
a unit for collecting a material containing the injected manganese oxide;
a unit for recovering the collected material;
a unit for separating manganese oxide from the recovered material; and
a unit for reclaiming the separated manganese oxide.

35. A waste incinerator comprising:
an apparatus for decomposing halogenated organic compound in flue gas, which apparatus being specified in claim 31.

36. An apparatus for decomposing halogenated organic compound in flue gas comprising:
a moving bed of a composition containing at least one oxide selected from the group consisting of trivalent manganese oxide and tetravalent manganese oxide, through which moving bed the flue gas passes.

37. The apparatus of claim 36, further comprising:
a unit for determining the quantity of halogenated organic compound in the flue gas; and
a unit for controlling the quantity of composition containing at least one oxide selected from the group consisting of trivalent manganese oxide and tetravalent manganese oxide moving through the moving bed based on the determined quantity of halogenated organic compound.

38. The apparatus of claim 36, further comprising:
a unit for recovering a material containing manganese oxide from the moving bed.

39. The apparatus of claim 38, further comprising:
a unit for separating manganese oxide from the recovered material.

40. The apparatus of claim 38, further comprising:
a unit for separating manganese oxide from the recovered material; and
a unit for reclaiming the separated manganese oxide.

41. The apparatus of claim 37, further comprising:
a unit for recovering a material containing manganese oxide from the moving bed;
a unit for separating manganese oxide from the recovered material; and
a unit for reclaiming the separated manganese oxide.

42. A waste incinerator comprising:
an apparatus for decomposing halogenated organic compound in flue gas, which apparatus being specified in claim 38.

43. An apparatus for decomposing halogenated organic compound in flue gas comprising:
a fixed bed configured by detachable single or plural packed chambers each filled with a composition containing at least one oxide selected from the group consisting of trivalent manganese oxide and tetravalent manganese oxide, through which fixed bed the flue gas passes.

44. The apparatus of claim 43, further comprising:
a unit for recovering manganese oxide from the fixed bed.

45. The apparatus of claim 44, further comprising:
a unit for separating a material containing manganese oxide from the recovered material.

46. The apparatus of claim 44, further comprising:
a unit for separating manganese oxide from the recovered material; and
a unit for reclaiming the separated manganese oxide.

47. A waste incinerator comprising:
an apparatus for decomposing halogenated organic compound in flue gas, which apparatus being specified in claim 44.

48. A composition containing at least one manganese oxide of trivalent and tetravalent, having particle sizes thereof from 5 µm to 10 mm, being used to decompose halogenated organic compound in flue gas, applying the method specified in claim 1.

49. A composition containing at least one manganese oxide of trivalent and tetravalent, having particle sizes thereof from 5 µm to 100 µm, specified in claim 48.

50. A composition containing at least one manganese oxide of trivalent and tetravalent, having particle sizes thereof from 0.5 mm to 15 mm, being used to decompose halogenated organic compound in flue gas, applying the method specified in claim 11 or claim 21.
